# FASCICULE DE BREVET EUROPEEN

(11) **EP 3 794 223 B1**
(45) Date de publication et mention de la délivrance du brevet: **22.10.2025**
(21) Numéro de dépôt: 19745706.2
(22) Date de dépôt: 24.06.2019
(51) Int. Cl.: F01P 5/02, F04F 5/16, F04D 17/04, F01P 7/10, F01P 5/06, F04D 25/08, F04D 29/28, F04D 29/42, F04F 5/46

(54) **MODULE D'ÉCHANGEUR DE CHALEUR POUR VEHICULE AUTOMOBILE**
WÄRMETAUSCHERMODUL FÜR EIN KRAFTFAHRZEUG
HEAT EXCHANGER MODULE FOR A MOTOR VEHICLE

(30) Priorité: 26.06.2018 FR 1855727
(43) Date de publication de la demande: 24.03.2021
(73) Titulaire: Valeo Systemes Thermiques-THS, 78322 Le Mesnil Saint Denis Cedex (FR)
(72) Inventeur: LISSNER, Michael, 78322 LE MESNIL SAINT DENIS CEDEX (FR); MAMMERI, Amrid, 78322 LE MESNIL SAINT DENIS CEDEX (FR); AZZOUZ, Kamel, 78322 LE MESNIL SAINT DENIS CEDEX (FR); BAKIR, Farid, 78322 LE MESNIL SAINT DENIS CEDEX (FR); KHELLADI, Sofiane, 78322 LE MESNIL SAINT DENIS CEDEX (FR); DOBREV, Ivan, 78322 LE MESNIL SAINT DENIS CEDEX (BG)
(74) Mandataire: Valeo Powertrain Systems
(86) Numéro de dépôt international: PCT/FR2019/051537
(87) Numéro de publication internationale: WO 2020/002808

(56) Documents cités:
- EP-A1- 0 233 174
- DE-A1- 102008 020 310
- DE-A1- 102009 032 601
- DE-A1- 4 023 260
- GB-A- 885 223
- US-A1- 2015 328 979

## Description

L'invention a pour objet un module d'échangeur de chaleur pour véhicule automobile.

L'invention se rapporte au domaine de l'automobile, et plus particulièrement au domaine de la circulation d'air pour le refroidissement du moteur et de ses équipements.

Les véhicules à moteur, qu'ils soient à combustion ou électriques, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

Un tel dispositif de ventilation comprend le plus souvent un ventilateur à hélice, qui présente plusieurs inconvénients. Un tel dispositif de ventilation est décrit dans le document DE 10 2008 020310 A1.

En premier lieu, l'ensemble formé par le ventilateur à hélice et son dispositif de motorisation occupe un volume important.

De plus, la distribution de l'air ventilé par l'hélice, souvent placée au centre de la rangée de tubes, n'est pas homogène sur l'ensemble de la surface de l'échangeur de chaleur. En particulier, certaines régions de l'échangeur de chaleur, comme les extrémités des tubes caloporteurs et les coins de l'échangeur de chaleur, ne sont pas ou peu atteintes par le flux d'air éjecté par l'hélice.

Par ailleurs, lorsque la mise en marche du dispositif de ventilation ne s'avère pas nécessaire, notamment lorsque l'échange de chaleur avec l'air ambiant suffit à refroidir le fluide caloporteur, les pales de l'hélice obstruent ou « masquent » en partie l'écoulement de l'air ambiant vers les tubes et les ailettes. Ceci limite l'échange de chaleur entre l'air ambiant, d'une part, et les tubes et les ailettes, d'autre part.

De surcroît, dans ce cas, les frictions du moteur sont moins vite réduites, ce qui augmente la consommation du véhicule et donc l'émission de dioxyde de carbone. Le document EP0233174A1 divulgue un véhicule avec un ventilateur alternatif, de type tangentiel, qui alimente le radiateur de refroidissement.

Un but de l'invention est de fournir un dispositif de ventilation pour échangeur de chaleur ne présentant pas au moins certains des inconvénients des dispositifs de ventilation pour échangeur de chaleur connus.

A cet effet, l'invention a pour objet un module d'échangeur de chaleur selon la revendication 1.

Ainsi, avantageusement, la pluralité de tubes desquels est éjecté de l'air permet de remplacer l'hélice conventionnelle disposée devant les tubes de circulation d'un fluide caloporteur de l'échangeur de chaleur, sans en présenter les inconvénients évoqués ci-dessus.

En effet, à capacités d'échange de chaleur égales, le volume occupé par un tel dispositif de ventilation est bien moindre qu'un dispositif de ventilation à hélice. En outre, la répartition de l'air ventilé par les tubes est plus facile à contrôler et peut être rendue plus homogène.

En outre, grâce au dispositif selon l'invention, on limite l'obstruction de l'écoulement de l'air vers l'échangeur de chaleur. En effet, les tubes du dispositif de ventilation peuvent avantageusement être disposés en regard de zones de faible échange de chaleur de l'échangeur de chaleur, dites « zones mortes », telles que les faces frontales des tubes traversés par le fluide caloporteur, qui ne sont pas en contact avec des ailettes de refroidissement. Ceci n'est pas réalisable avec une hélice conventionnelle.

Par ailleurs, l'invention permet de déporter les moyens d'éjection d'air alimentant en flux d'air les tubes du dispositif de ventilation, à distance de la rangée de tubes de circulation de fluide caloporteur, ce qui offre davantage de libertés dans la conception de l'échangeur de chaleur.

Selon l'invention, le dispositif comprend au moins un collecteur de distribution d'air aux tubes, au moins une turbomachine étant agencée dans ledit au moins un collecteur, ladite au moins une turbomachine comprenant un ventilateur tangentiel, ledit au moins un collecteur formant volute du ventilateur tangentiel.

Selon l'invention, la volute comprend une entrée d'air dans le collecteur par laquelle un flux d'air peut être aspiré par le ventilateur tangentiel, et une sortie d'air par laquelle le flux d'air aspiré peut être distribué aux tubes, les tubes s'étendant parallèlement à une direction longitudinale des tubes, dite direction longitudinale, le ventilateur tangentiel s'étendant dans une direction orthogonale à la direction longitudinale, dite direction d'aspiration, une autre direction, dite direction d'avancement, orthogonale à la direction longitudinale et à la direction d'aspiration.

Selon une autre caractéristique de l'invention, l'entrée d'air comprend une première paroi d'entrée faisant avec ladite direction longitudinale un angle compris entre 40° et 75°, et de préférence 58°.

Selon une autre caractéristique de l'invention, une extrémité de la première paroi opposée à l'entrée d'air est courbée dans un plan contenant la direction longitudinale et la direction d'avancement, dont une longueur est comprise entre 1 mm et 8 mm et une distance minimale entre ladite extrémité et un disque délimité par le ventilateur tangentiel dans ledit plan est comprise entre est comprise entre 0,5 mm et 1,5 mm.

Selon une autre caractéristique de l'invention, l'entrée d'air comprend une deuxième paroi d'entrée comprenant un bord arrondi conformé de sorte que sa courbure dans un plan contenant la direction longitudinale et la direction d'avancement est un arc d'un cercle dont le centre se situe sur un cercle concentrique d'un disque délimité par le ventilateur tangentiel dans ledit plan.

Selon une autre caractéristique de l'invention, le dispositif comprend une partie de jonction de l'entrée d'air de la volute et de la sortie d'air de la volute, dite partie intermédiaire, conformée pour loger le ventilateur tangentiel.

Selon une autre caractéristique de l'invention, ladite partie intermédiaire comprend une paroi, dite paroi intermédiaire, courbée selon un arc de cercle dans un plan contenant la direction longitudinale et la direction d'avancement, ledit arc de cercle présentant un centre distinct du centre d'un disque délimité par le ventilateur tangentiel dans ledit plan.

Selon une autre caractéristique de l'invention, une distance entre le centre de la paroi intermédiaire et le centre du disque est inférieure ou égale à la valeur du rayon du disque.

Selon une autre caractéristique de l'invention, une section de la partie intermédiaire au niveau d'une interface entre la partie intermédiaire et la sortie d'air forme un angle, de préférence non nul, avec la direction longitudinale, de préférence compris dans l'intervalle [0° 20], d préférence encore dans l'intervalle ]0°,20°].

Selon une autre caractéristique de l'invention, le ventilateur tangentiel est adapté à créer un flux d'air de débit compris entre 0 et 750 m³/h et de pression comprise entre 0 et 900 Pa. Pour ce faire, le ventilateur tangentiel comprend un rotor dont la vitesse de rotation peut être comprise entre 2000 tr/min et 13 000 tr/min, de préférence comprise entre 2500 tr/min et 9000 tr/min.

Pour ce faire, on peut notamment prévoir une ou plusieurs des caractéristiques suivantes, prises seules ou en combinaison :
- le rotor est formé de plusieurs étages de pales séparés par des disques de renfort ;
- le rotor présente une hauteur de pales, définie comme la somme de la hauteur des différents étages de pales, mesurée parallèlement à l'axe de rotation du rotor, comprise entre 100 et 600 mm ;
- chaque étage de pales a une hauteur, mesurée parallèlement à l'axe de rotation du rotor, comprise entre 16 et 33 mm ;
- chaque disque de renfort a une épaisseur, mesurée parallèlement à l'axe de rotation du rotor, comprise entre 0,8 et 1,5 mm ;
- chaque étage de pales comprend entre 15 et 30 pales, de préférence compris entre 20 et 28 pales ;
- les différentes pales de chaque étage de pales 51 sont inscrites dans un anneau de diamètre interne Dint et de diamètre externe Dext ;
- le diamètre interne est compris entre 0 et 84 mm, de préférence compris entre 60 et 84 mm ;
- le diamètre externe est compris entre 35 et 120 mm, de préférence compris entre 60 et 120 mm ;
- chaque pale présente une section transversale en forme de croissant, les pales étant de préférence sensiblement cylindrique ;
- un angle de calage γ de chaque pale, défini comme étant l'angle entre la corde de la pale et un axe reliant l'axe de rotation du rotor au centre géométrique de la section transversale de la pale 53, est compris entre 0 et 30° ;
- un angle d'écoulement au bord d'attaque de chaque pale, défini comme étant l'angle entre la ligne de courant au bord d'attaque de la pale et la tangente au diamètre extérieur du rotor, est compris entre 0° et 40°, de préférence compris en 10° et 20° ;
- un angle d'écoulement au bord de fuite de chaque pale, défini comme étant l'angle entre la ligne de courant au bord de fuite de la pale, et la tangente au diamètre intérieur du rotor, est compris entre 60° et 90°, de préférence compris entre 70° et 80° ;
- l'épaisseur maximale de la section transversale de chaque pale est comprise entre 0,35 et 1,6 mm, de préférence compris entre 0,8 et 1,2 mm ;
- la longueur de la corde de la section transversale de chaque pale, reliant le bord d'attaque au bord de fuite de la section transversale de chaque pale, selon un segment rectiligne, est comprise entre 6 et 8 mm ;
- le rotor est formé de plusieurs portions, des paliers de roulements étant intercalés entre chaque portions ; et
- le rotor est formé d'un nombre de portions inférieur à 4.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective éclatée d'un module d'échanges de chaleur équipé d'un dispositif de ventilation selon la présente invention ;
- la figure 2 illustre une vue en coupe transversale de deux tubes de la figure 1 ;
- les figures 3 à 6 illustre une vue en coupe transversale d'un collecteur du dispositif de la figure 1, des éléments particuliers étant dessinés sur la vue en coupe ;
- la figure 7 est une vue de détail de l'une des figures 3 à 6 ;
- la figure 8 est une vue en perspective d'un premier exemple de rotor du ventilateur tangentiel mis en œuvre dans le collecteur illustré aux figures 3 à 6 ;
- la figure 9 est une vue analogue à la figure 8 d'un détail du rotor de la figure 8 ;
- la figure 10 est une vue schématique en coupe transversale du rotor des figures 8 et 9 ;
- les figures 11 et 12 sont des vues schématiques en coupe transversales d'une pale du rotor des figures 8 et 9 ; et
- la figure 13 est une vue en perspective d'un deuxième exemple de rotor pouvant être mis en œuvre dans le ventilateur tangentiel à l'intérieur du collecteur illustré aux figures 3 à 6.

### Module d'échange de chaleur

L'invention a pour objet un module d'échange de chaleur 100, comprenant le dispositif de ventilation 1 et un échangeur de chaleur 101.

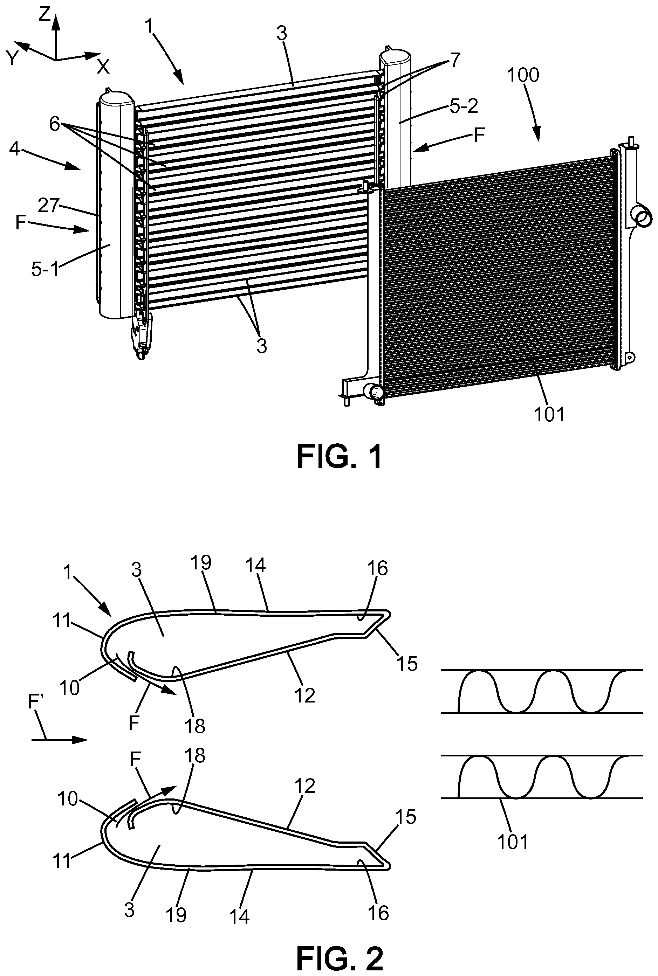

Comme visible sur la figure 1, le dispositif de ventilation 1 et l'échangeur de chaleur 101 sont positionnés l'un relativement à l'autre de sorte qu'un flux d'air mis en mouvement par le dispositif de ventilation 1 alimente en air l'échangeur de chaleur, de préférence pour refroidir le moteur du véhicule automobile.

Le dispositif de ventilation 1 est disposé en amont de l'échangeur de chaleur 101 sur la figure 1 (relativement à un flux d'air provenant de l'extérieur du véhicule en mouvement).

Néanmoins, le dispositif de ventilation peut également être disposé en aval de l'échangeur de chaleur 101.

### Dispositif de ventilation

Comme visible sur les figures, le dispositif de ventilation 1 comprend une pluralité de tubes 3.

Les tubes 3 sont sensiblement rectilignes, parallèles entre eux et alignés de manière à former une rangée de tubes.

Quand le module d'échange est installé dans le véhicule automobile, les tubes 3 peuvent être disposés horizontalement, parallèlement à une direction longitudinale du dispositif de ventilation, notée X. Selon une autre réalisation possible du module d'échange (non illustrée sur les figures), les tubes peuvent être disposés verticalement.

Une direction verticale est notée Z.

Une direction orthogonale aux directions X et Z, coïncidant avec une direction d'avancement du véhicule, est notée Y.

Le dispositif de ventilation 1 comprend également un dispositif d'alimentation en air d'un flux d'air F.

Ce dispositif alimente les tubes de ventilation 3 via un circuit d'alimentation en air 4.

Le circuit d'alimentation en air 4 comporte notamment deux collecteurs d'admission d'air 5-1, 5-2 auxquels sont reliés les tubes de ventilation 3 par l'intermédiaire d'entrées d'alimentation en air situées à chacune de leurs extrémités 6, 7.

Avantageusement, le circuit d'alimentation comprend également une ou plusieurs turbomachines 26 pour éjecter l'air à travers les collecteurs d'admission 5-1, 5-2, jusque dans les tubes de ventilation 3.

Avantageusement, chaque turbomachine est un ventilateur tangentiel.

Sur la figure 1, le ventilateur tangentiel 26 est logé dans le collecteur 5-1.

Le collecteur 5-1 comprend une unique ouverture 27 s'étendant le long du collecteur 5-1.

Comme visible sur la figure 2, chaque tube de ventilation 3 comprend au moins une ouverture 10 distincte des extrémités 6, 7, pour éjecter l'air hors du tube 3.

De préférence, les ouvertures 10 sont destinées à être disposées en regard de l'échangeur de chaleur.

Comme visible sur la figure 2, chaque tube 3 comprend une paroi longitudinale 19 dont une section transversale comprenant un bord d'attaque 11 libre, un bord de fuite 15 et un premier et un deuxième profils 12, 14, s'étendant chacun entre le bord d'attaque 11 et le bord de fuite 15.

Le bord de fuite 15 est de préférence disposé en regard de l'échangeur de chaleur.

La paroi longitudinale 19 est délimitée par une surface interne 16 et une surface externe 18.

Chaque ouverture 10 est pratiquée dans la paroi longitudinale 19 du tube 3, de préférence dans l'un ou l'autre des profils 12, 14. Alternativement, une ouverture 10 peut être pratiquée dans la paroi longitudinale 19 du tube, dans les deux profils 12, 14.

Sur la figure 2, chaque ouverture 10 est positionnée à proximité du bord d'attaque 11.

Comme également visible sur la figure 2, les ouvertures 10 de la paire de tubes 3 illustrée sont pratiquées dans les profils 12 se faisant face.

Ainsi, les tubes de ventilation 3 et leurs ouvertures 10 sont configurés de sorte que le flux d'air F circulant dans les tubes de ventilation 3 soit éjecté par l'ouverture 10 en s'écoulant le long de chaque profil 12, sensiblement jusqu'à leurs bords de fuite 52, par effet Coanda.

Le flux d'air F éjecté des tubes 3 permet d'accélérer un autre flux F' dans un sens d'écoulement vers l'échangeur de chaleur.

On note que les sections transversales des tubes 3 sont telles que les profils 12 s'étendent dans un sens d'éloignement des tubes 3 depuis les bords d'attaque 11 jusqu'aux bords de fuite 15.

### Turbomachines du dispositif de ventilation

Comme indiqué précédemment, une turbomachine 26 pour éjecter l'air à travers les collecteurs d'admission 5-1, 5-2, jusque dans les tubes de ventilation 3, sont avantageusement reçues dans chaque collecteur d'admission 5-1, 5-2. Avantageusement encore, chacune de ces turbomachines est un ventilateur tangentiel 26 comprenant un rotor 50.

Le rotor 50 du ventilateur tangentiel 26 est avantageusement conformé pour créer un flux d'air de débit compris entre 0 et 750 m³/h, et de pression d'air correspondante comprise entre 0 et 900 Pa. La vitesse de rotation du rotor 50, correspondante, est par exemple comprise entre 2000 tr/min et 13000 tr/min, de préférence comprise entre 2500 tr/min et 9000 tr/min. Ainsi, on optimise la vitesse de rotation du rotor 50 du ventilateur tangentiel 26 pour assurer un débit d'air permettant un refroidissement efficace du module d'échange de chaleur.

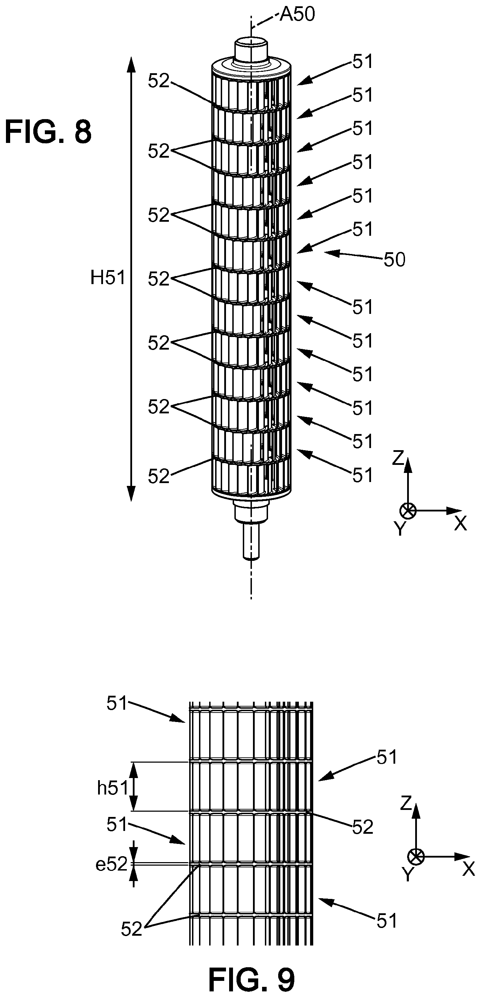

Un premier exemple de rotor 50 d'un tel ventilateur tangentiel 26 est illustré par les figures 8 à 12.

Ce premier exemple de rotor 50 est formé de plusieurs étages 51 de pales (ou aubes) séparés par des disques de renfort 52. En l'espèce, le rotor 50 comprend treize étages de pales 51. En tout, le rotor 50 présente une hauteur de pales H51, définie comme la somme de la hauteur des différents étages de pales 51, mesurée parallèlement à l'axe A50 de rotation du rotor 50, comprise entre 100 et 600 mm. Chaque étage de pales 51 a une hauteur h51, mesurée parallèlement à l'axe A50 de rotation du rotor 50, comprise entre 16 et 33 mm. Ces dimensions visent à permettre d'assurer la création du débit d'air souhaité.

Chaque disque de renfort 52 a par exemple une épaisseur, également mesurée parallèlement à l'axe A50 de rotation du rotor 50, comprise entre 0,8 et 1,5 mm. Ces dimensions permettent notamment d'assurer la solidité mécanique du rotor 50.

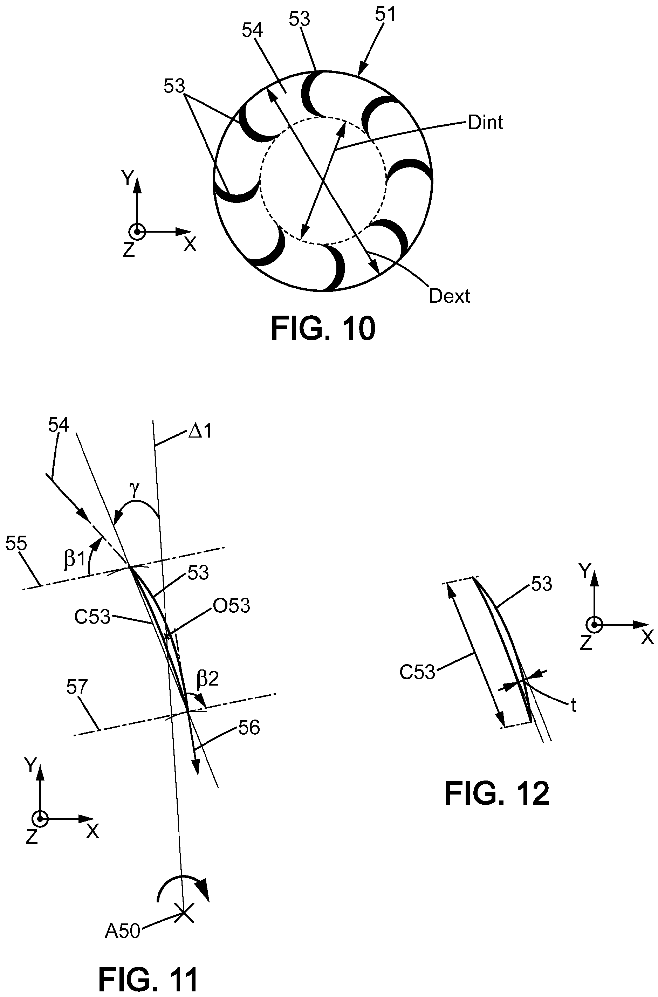

Comme visible sur la figure 10, notamment, chaque étage de pales 51 peut par exemple comprendre entre 15 et 30 pales 53 (ou aubes), de préférence entre 20 et 28 pales. Il est à noter ici que les pales 53 permettent d'obtenir un flux d'air souhaité, mais également de rigidifier le rotor 50.

Les différentes pales 53 de chaque étage de pales 51 sont inscrites dans un anneau 54 de diamètre interne Dint et de diamètre externe Dext. Le diamètre interne Dint est par exemple compris entre 0 et 84 mm, de préférence compris entre 60 et 84 mm. Le diamètre externe Dext est par exemple compris entre 35 et 120 mm, de préférence compris entre 60 et 120 mm.

Chaque pale 53 présente une section transversale, dans un plan (X, Y) en forme de croissant. La forme d'une pale 53 est décrite plus précisément ci-après, en regard des figures 11 et 12 qui illustre la section transversale d'une pale 53 dans un plan (X, Y), les pales étant sensiblement cylindriques d'axe parallèle à la direction Z, ici verticale.

Comme cela est visible sur la figure 11, on définit un angle de calage γ d'une pale 53, comme étant l'angle entre la corde c53 de la pale 53 et un axe Δ1 reliant dans le plan (X, Y) de la figure 11, l'axe de rotation A50 du rotor au centre géométrique O₅₃ de la pale 53. Cet angle de calage γ est par exemple compris entre 0 et 30°.

On définit par ailleurs un angle d'écoulement au bord d'attaque β1, comme étant l'angle entre la ligne de courant au bord d'attaque 54 et la tangente 55 au diamètre extérieur du rotor 50. L'angle d'écoulement au bord d'attaque β1 est par exemple compris entre 0° et 40°, de préférence compris entre 10° et 20°.

On définit encore un angle d'écoulement au bord de fuite β2 comme étant l'angle entre la ligne de courant au bord de fuite 56, et la tangente 57 au diamètre intérieur du rotor 50 au bord de fuite. Cet angle d'écoulement au bord de fuite β2 est par exemple compris entre 60° et 90°, de préférence compris entre 70° et 80°.

L'épaisseur maximale t de la section transversale de chaque pale 53, mesurée dans un plan (X, Y), est par exemple comprise entre 0,35 et 1,6 mm, de préférence compris entre 0,8 et 1,2 mm.

Enfin, la longueur de la corde c53 de chaque pale 53, reliant le bord d'attaque au bord de fuite de la pale 53 considérée, selon un segment rectiligne dans un plan (X, Y), est comprise entre 6 et 8 mm.

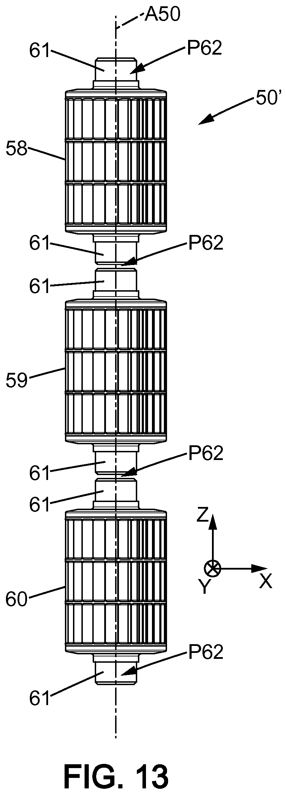

La figure 13 illustre un deuxième exemple de rotor 50' pour le ventilateur tangentiel 26. Ce deuxième exemple de rotor 50' se distingue du premier 50 qui vient d'être décrit essentiellement en ce qu'il est formé de plusieurs portions 58, 59, 60. Ces portions 58, 59, 60 sont ici identiques. Les portions 58, 59, 60 sont ici au nombre de trois. Le deuxième exemple de rotor 50' peut cependant comporter moins de portions 58, 59, 60, par exemple seulement deux portions distinctes, ou plus de portions. Chaque portions 58, 59, 60 forme un ou plusieurs étages de pales 51. Surtout, ici, chaque portion 58, 59, 60 présente à ses deux extrémités longitudinales un ergot 61 destiné à être reçu dans un palier de roulement (non représenté). Un palier de roulement est classiquement réalisé au moyen d'un roulement, notamment d'un roulement à billes ou à rouleaux, par exemple. Les paliers de roulement permettent notamment de casser les fréquences propres et, ainsi, de limiter les phénomènes de résonance qui sont la source de bruits importants. À vitesse de rotation élevée du rotor 50, 50', il est intéressant d'avoir un plus grand nombre de paliers de roulement. Ici, avec un rotor 50' formé de trois portions 58, 59, 60, quatre paliers peuvent être mis en œuvre, qui sont placés aux points indiqués P62. Avantageusement, dans le cadre de l'invention, le nombre de paliers mis en œuvre avec le rotor 50, 50' est inférieur à 4. Il est également envisageable de ne prévoir aucun palier de roulement, notamment dans le cas où le rotor 50 a une hauteur faible, notamment inférieure à 100 mm. Dans ce cas, le palier du rotor d'entraînement, entrainant le rotor 50, 50' en rotation autour de son axe de rotation A50, peut suffire pour maintenir le rotor 50, 50' stable.

### Volute

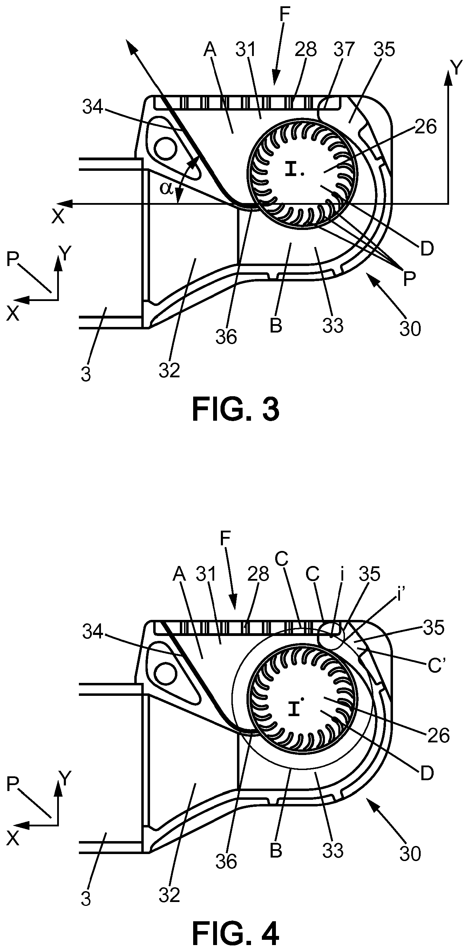

Comme il ressort des figures 3 à 7, le collecteur 5-1 délimite une volute 30 du ventilateur tangentiel 26.

La volute 30 comprend une entrée d'air 31, une sortie d'air 32 et une partie de jonction entre l'entrée d'air 31 et la sortie d'air 32, appelée partie intermédiaire 33.

L'entrée d'air 31 comprend l'ouverture 27 par laquelle un flux d'air F est aspiré par le ventilateur tangentiel 26.

L'ouverture 27 est munie d'une grille de protection 28.

La sortie d'air 32 est connectée à chacun des tubes 3 pour y distribuer le flux d'air F.

La partie intermédiaire 33 forme logement du ventilateur tangentiel 26.

La partie intermédiaire constitue une frontière entre une zone d'aspiration A à l'entrée 31 et une zone de refoulement B à la sortie 32.

Comme il ressort des figures 3 à 6, la section de l'entrée d'air 31 est convergente depuis l'ouverture 27, ce qui permet d'accélérer le flux d'air et de ne pas avoir de décrochage de l'écoulement d'air derrière des parties avec des variations importantes d'angle.

De la même façon, la section intermédiaire et la section de sortie ne comportent que des variations douces d'orientation, comme il va être détaillé.

Les figures 3 à 7 sont des vues en coupe dans le plan (X, Y), noté plan P.

Comme illustré sur les figures 3 à 6, l'entrée d'air 31 comprend une première paroi d'entrée 34, appelée paroi latérale d'aspiration, et une deuxième entrée 35 opposée à la première entrée d'air 34.

Comme visible sur la figure 3, la paroi latérale d'aspiration 34 fait avec la direction longitudinale X un angle α compris entre 40° et 75°, et de préférence 58°.

Ces valeurs d'angle assurent un écoulement sans turbulence dans l'entrée 31 jusqu'au ventilateur 26.

La paroi latérale d'aspiration 34 s'étend depuis l'ouverture 27 jusqu'à une extrémité courbée 36 proche de pales p du ventilateur 26, appelée bec anti-recirculation.

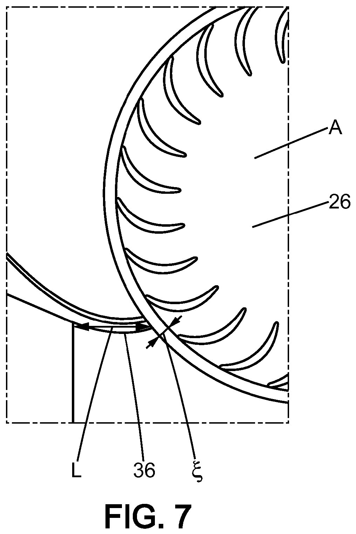

Comme particulièrement visible sur la figure 7, l'extrémité 36 est disposée entre l'aspiration et le refoulement, et sa forme courbée, dont les dimensions sont indiquées ci-après, évite toute recirculation de l'air dans la volute.

L'extrémité 36 est appelée bec anti-recirculation.

De préférence, une longueur L du bec 36 est comprise entre 1 mm et 8 mm et une distance minimale m entre le bec et un disque D délimité par le ventilateur tangentiel dans le plan P est comprise entre 0,5 mm et 1,5 mm.

Comme déjà indiqué, ces dimensions du bec 36 permettent d'éviter toute recirculation d'air dans la volute 30 malgré la haute pression atteinte dans la zone de refoulement B.

Comme visible sur la figure 4, la deuxième paroi 35 de l'entrée d'air 31 comprend un bord arrondi 37 de l'ouverture 27.

Sur la figure 4, la courbure du bord 37 est formée par un arc d'un cercle c dont un centre i se situe sur un cercle C concentrique du disque D dont le centre est noté I.

Sur la figure 4, on a illustré un autre cercle c' dont le centre i' se situe sur le cercle C.

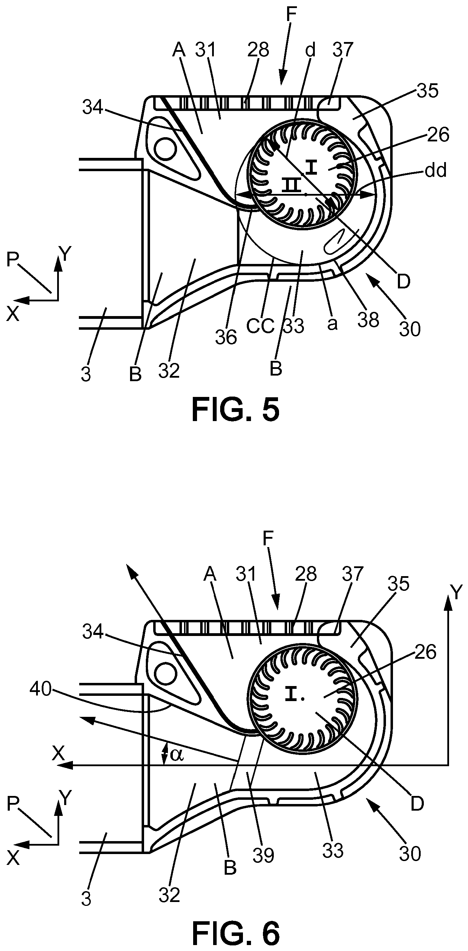

Comme visible sur la figure 5, la partie intermédiaire 33 comprend une paroi, dite paroi intermédiaire 38, courbée selon un arc de cercle a.

Le cercle CC comprenant l'arc de cercle a présente un centre Il distinct du centre I du disque D, c'est-à-dire que le cercle CC n'est pas concentrique du disque D.

Comme il ressort également de la figure 5, un diamètre dd de la partie intermédiaire 33 est supérieur à un diamètre d du disque D.

Ainsi, la partie intermédiaire 33 présente une section qui s'agrandit progressivement dans un sens d'écoulement de l'air entre l'entrée d'air 31 et la sortie d'air 32.

Cette augmentation permet de réduire fortement la recirculation d'air dans la volute 30.

Avantageusement, une distance entre le centre II de la paroi intermédiaire 38 et le centre I du disque D est inférieure ou égale à la valeur du rayon du disque D.

Comme illustré sur la figure 6, une section 39 de la partie intermédiaire 33 au niveau d'une interface 40 entre la partie intermédiaire 33 et la sortie 32 forme un angle α, de préférence non nul, avec la direction X, avantageusement compris dans l'intervalle [0°, 20°], de manière plus avantageuse dans l'intervalle ]0°, 20°], et de préférence encore de l'ordre de 15°.

Cet angle permet d'homogénéiser la vitesse de l'air en sortie du ventilateur 26 du fait qu'il augmente la longueur du parcours de l'air plus proche d'une paroi de sortie 40 (par rapport à un angle nul).

La sortie 32 présente la forme d'un cône divergent depuis la partie intermédiaire 33 vers les tubes 3, ce qui participe également à l'homogénéisation de la vitesse dans les tubes et assure une distribution de l'air sur toute la surface d'entrée de chaque tube 3.

## Revendications

1. Module d'échange de chaleur (100) comprenant un échangeur de chaleur (101) comportant des tubes de circulation d'un fluide caloporteur et un dispositif de ventilation (1) pour véhicule automobile comprenant au moins un collecteur (5-1, 5-2) de distribution d'air à des tubes (3) du dispositif de ventilation (1), au moins une turbomachine (26) étant agencée dans ledit au moins un collecteur (5-1, 5-2), ladite au moins une turbomachine (26) comprenant un ventilateur tangentiel (26), ledit au moins un collecteur (5-1, 5-2) formant volute (30) du ventilateur tangentiel (26), ladite volute (30) comprenant une entrée d'air (31) dans le collecteur (5-1, 5-2) par laquelle un flux d'air peut être aspiré par le ventilateur tangentiel (26), et une sortie d'air (33) par laquelle le flux d'air aspiré peut être distribué aux tubes (3), les tubes (3) s'étendant parallèlement à une direction (X) longitudinale des tubes (3), dite direction longitudinale, le ventilateur tangentiel (26) s'étendant dans une direction orthogonale (Z) à la direction longitudinale, dite direction d'aspiration, une autre direction (Y), dite direction d'avancement, orthogonale à la direction longitudinale et à la direction d'aspiration, ledit dispositif de ventilation (1) et l'échangeur de chaleur (101) étant positionnés l'un relativement à l'autre de sorte que flux d'air mis en mouvement par le dispositif de ventilation (1) alimente en air l'échangeur de chaleur (101)

2. Module d'échange de chaleur (100) selon la revendication 1, dans lequel l'entrée d'air (31) comprend une première paroi d'entrée (34) faisant avec ladite direction longitudinale (X) un angle compris entre 40° et 75°, et de préférence 58°.

3. Module d'échange de chaleur (100) selon la revendication précédente, dans lequel une extrémité (36) de la première paroi (34) opposée à l'entrée d'air (31) est courbée dans un plan (P) contenant la direction longitudinale (X) et la direction d'avancement (Y), dont une longueur (L) est comprise entre 1 mm et 8 mm et une distance (d) minimale entre ladite extrémité (36) et un disque (D) délimité par le ventilateur tangentiel dans ledit plan (P) est comprise entre 0,5 mm et 1,5 mm.

4. Module d'échange de chaleur (100) selon l'une des revendications 2 ou 3, dans lequel l'entrée d'air (31) comprend une deuxième paroi d'entrée (35), ladite deuxième paroi (35) comprenant un bord arrondi (37) conformé de sorte que sa courbure dans un plan (P) contenant la direction longitudinale (X) et la direction d'avancement (Y) est un arc d'un cercle dont le centre se situe sur un cercle concentrique d'un disque (D) délimité par le ventilateur tangentiel dans ledit plan (P).

5. Module d'échange de chaleur (100) selon l'une des revendications précédentes, comprenant une partie de jonction de l'entrée d'air (31) de la volute (30) et de la sortie d'air (32) de la volute, dite partie intermédiaire (33), conformée pour loger le ventilateur tangentiel (26).

6. Module d'échange de chaleur (100) selon la revendication précédente, dans lequel ladite partie intermédiaire (33) comprend une paroi, dite paroi intermédiaire (38), courbée selon un arc de cercle dans un plan (P) contenant la direction longitudinale (X) et la direction d'avancement (Y), ledit arc de cercle présentant un centre distinct du centre d'un disque (D) délimité par le ventilateur tangentiel dans ledit plan (P).

7. Module d'échange de chaleur (100) selon la revendication précédente, dans lequel une distance entre le centre de la paroi intermédiaire (38) et le centre du disque (D) est inférieure ou égale à la valeur du rayon du disque.

8. Module d'échange de chaleur (100) selon l'une des revendications 5 à 7, dans lequel une section de la partie intermédiaire (33) au niveau d'une interface entre la partie intermédiaire (33) et la sortie d'air (32) forme un angle (α), de préférence non nul, avec la direction longitudinale (X), de préférence compris dans l'intervalle [0°, 20°], de préférence encore dans l'intervalle ]0°, 20°].

9. Module d'échange de chaleur (100) selon l'une quelconque des revendications précédentes, dans lequel le ventilateur tangentiel (26) est adapté à créer un flux d'air de débit compris entre 0 et 750 m³/h et de pression comprise entre 0 et 900 Pa, le ventilateur tangentiel comprenant un rotor (50) dont la vitesse de rotation est de préférence comprise entre 2000 tr/min et 13 000 tr/min, de préférence comprise entre 2500 tr/min et 9000 tr/min.

## Patentansprüche

1. Wärmeaustauschmodul (100) mit einem Wärmetauscher (101) mit Rohren zur Zirkulation eines Wärmeübertragungsfluids und einer Belüftungsvorrichtung (1) für ein Kraftfahrzeug, umfassend mindestens einen Verteiler (5-1, 5-2) zur Verteilung von Luft auf Rohre (3) der Belüftungsvorrichtung (1), wobei in dem mindestens einen Verteiler (5-1, 5-2) mindestens eine Turbomaschine (26) angeordnet ist, wobei die mindestens eine Turbomaschine (26) einen Tangentialventilator (26) umfasst, wobei der mindestens eine Verteiler (5-1, 5-2) eine Spirale (30) des Tangentialventilators (26) bildet, wobei die Spirale (30) einen Lufteinlass (31) im Verteiler (5-1, 5-2), durch den ein Luftstrom vom Tangentialventilator (26) angesaugt werden kann, und einen Luftauslass (33) umfasst, durch den der angesaugte Luftstrom auf die Rohre (3) verteilt werden kann, wobei sich die Rohre (3) parallel zu einer Längsrichtung erstrecken (X) der Rohre (3), die als Längsrichtung bezeichnet wird, wobei sich der Tangentialventilator (26) in einer Richtung orthogonal (Z) zur Längsrichtung erstreckt, die als Saugrichtung bezeichnet wird, und einer anderen Richtung (Y), die als Vorwärtsrichtung bezeichnet wird, die orthogonal zur Längsrichtung und zur Saugrichtung ist, wobei die Belüftungsvorrichtung (1) und der Wärmetauscher (101) so zueinander positioniert sind, dass der von der Belüftungsvorrichtung (1) in Bewegung gesetzte Luftstrom den Wärmetauscher (101) mit Luft versorgt.

2. Wärmeaustauschmodul (100) nach Anspruch 1, wobei der Lufteinlass (31) eine erste Einlasswand (34) umfasst, die mit der Längsrichtung (X) einen Winkel zwischen 40° und 75°, vorzugsweise 58°, bildet.

3. Wärmeaustauschmodul (100) nach dem vorhergehenden Anspruch, wobei ein Ende (36) der ersten Wand (34) gegenüber dem Lufteinlass (31) in einer Ebene (P) gekrümmt ist, die die Längsrichtung (X) und die Vorschubrichtung (Y) enthält, wobei eine Länge (L) davon zwischen 1 mm und 8 mm liegt und ein Mindestabstand (d) zwischen dem Ende (36) und einer Scheibe (D), die durch den Tangentialventilator in der Ebene (P) begrenzt wird, zwischen 0,5 mm und 1,5 mm liegt.

4. Wärmeaustauschmodul (100) nach einem der Ansprüche 2 oder 3, wobei der Lufteinlass (31) eine zweite Einlasswand (35) umfasst, wobei die zweite Wand (35) eine abgerundete Kante (37) aufweist, deren Krümmung in einer Ebene (P), die die Längsrichtung (X) und die Vorschubrichtung (Y) enthält, einem Kreisbogen entspricht, dessen Mittelpunkt auf einem konzentrischen Kreis einer Scheibe (D) liegt, die in dieser Ebene (P) durch den Tangentialventilator begrenzt wird.

5. Wärmeaustauschmodul (100) nach einem der vorhergehenden Ansprüche, umfassend einen Verbindungsabschnitt zwischen dem Lufteinlass (31) der Spirale (30) und dem Luftauslass (32) der Spirale, den sogenannten Zwischenabschnitt (33), der zur Aufnahme des Tangentialventilators (26) geformt ist.

6. Wärmeaustauschmodul (100) nach dem vorhergehenden Anspruch, wobei der Zwischenabschnitt (33) eine Wand, die als Zwischenwand (38) bezeichnet wird, umfasst, die entlang eines Kreisbogens in einer Ebene (P) gekrümmt ist, die die Längsrichtung (X) und die Vorschubrichtung (Y) enthält, wobei der Mittelpunkt des Kreisbogens vom Mittelpunkt einer durch den Tangentialventilator in der Ebene (P) begrenzten Scheibe (D) verschieden ist.

7. Wärmeaustauschmodul (100) nach dem vorhergehenden Anspruch, wobei ein Abstand zwischen dem Mittelpunkt der Zwischenwand (38) und dem Mittelpunkt der Scheibe (D) kleiner oder gleich dem Radius der Scheibe ist.

8. Wärmeaustauschmodul (100) nach einem der Ansprüche 5 bis 7, wobei ein Abschnitt des Zwischenteils (33) an einer Schnittstelle zwischen dem Zwischenteil (33) und dem Luftauslass (32) einen Winkel (α), vorzugsweise ungleich Null, mit der Längsrichtung (X) bildet, vorzugsweise im Bereich von [0°, 20°], besonders bevorzugt im Bereich von [0°, 20°].

9. Wärmeaustauschmodul (100) nach einem der vorhergehenden Ansprüche, wobei der Tangentialventilator (26) dazu geeignet ist, einen Luftstrom mit einer Durchflussrate zwischen 0 und 750 m3/h und einem Druck zwischen 0 und 900 Pa zu erzeugen, wobei der Tangentialventilator einen Rotor (50) umfasst, dessen Drehzahl vorzugsweise zwischen 2000 U/min und 13.000 U/min, vorzugsweise zwischen 2500 U/min und 9000 U/min liegt.

## Claims

1. Heat exchange module (100) comprising a heat exchanger (101) comprising tubes for circulating a heat transfer fluid and a ventilation device (1) for a motor vehicle comprising at least one manifold (5-1, 5-2) for distributing air to tubes (3) of the ventilation device (1), at least one turbomachine (26) being arranged in said at least one manifold (5-1, 5-2), said at least one turbomachine (26) comprising a tangential fan (26), said at least one manifold (5-1, 5-2) forming a volute (30) of the tangential fan (26), said volute (30) comprising an air inlet (31) in the manifold (5-1, 5-2) through which an air flow can be sucked in by the tangential fan (26), and an air outlet (33) through which the sucked air flow can be distributed to the tubes (3), the tubes (3) extending parallel to a longitudinal direction (X) of the tubes (3), called the longitudinal direction, the tangential fan (26) extending in a direction orthogonal (Z) to the longitudinal direction, called the suction direction, another direction (Y), called the forward direction, orthogonal to the longitudinal direction and to the suction direction, said ventilation device (1) and the heat exchanger (101) being positioned relative to each other so that the air flow set in motion by the ventilation device (1) supplies air to the heat exchanger (101)

2. Heat exchange module (100) according to claim 1, wherein the air inlet (31) comprises a first inlet wall (34) making an angle of between 40° and 75°, and preferably 58°, with said longitudinal direction (X).

3. Heat exchange module (100) according to the preceding claim, wherein one end (36) of the first wall (34) opposite the air inlet (31) is curved in a plane (P) containing the longitudinal direction (X) and the direction of advance (Y), a length (L) of which is between 1 mm and 8 mm and a minimum distance (d) between said end (36) and a disc (D) delimited by the tangential fan in said plane (P) is between 0.5 mm and 1.5 mm.

4. Heat exchange module (100) according to one of claims 2 or 3, wherein the air inlet (31) comprises a second inlet wall (35), said second wall (35) comprising a rounded edge (37) shaped so that its curvature in a plane (P) containing the longitudinal direction (X) and the direction of advance (Y) is an arc of a circle whose center is located on a concentric circle of a disk (D) delimited by the tangential fan in said plane (P).

5. Heat exchange module (100) according to one of the preceding claims, comprising a junction portion of the air inlet (31) of the volute (30) and the air outlet (32) of the volute, called the intermediate portion (33), shaped to house the tangential fan (26).

6. Heat exchange module (100) according to the preceding claim, wherein said intermediate portion (33) comprises a wall, called intermediate wall (38), curved along an arc of a circle in a plane (P) containing the longitudinal direction (X) and the direction of advance (Y), said arc of a circle having a center distinct from the center of a disk (D) delimited by the tangential fan in said plane (P).

7. Heat exchange module (100) according to the preceding claim, wherein a distance between the center of the intermediate wall (38) and the center of the disk (D) is less than or equal to the value of the radius of the disk.

8. Heat exchange module (100) according to one of claims 5 to 7, wherein a section of the intermediate part (33) at an interface between the intermediate part (33) and the air outlet (32) forms an angle (α), preferably non-zero, with the longitudinal direction (X), preferably within the range [0°, 20°], more preferably within the range ├]0°,20°].

9. Heat exchange module (100) according to any one of the preceding claims, in which the tangential fan (26) is adapted to create an air flow with a flow rate of between 0 and 750 m3/h and a pressure of between 0 and 900 Pa, the tangential fan comprising a rotor (50) whose rotation speed is preferably between 2000 rpm and 13,000 rpm, preferably between 2500 rpm and 9000 rpm.
